# EUROPÄISCHE PATENTSCHRIFT

(11) **EP 2 512 729 B1**
(45) Veröffentlichungstag und Bekanntmachung des Hinweises auf die Patenterteilung: **03.07.2013**
(21) Anmeldenummer: 10773288.5
(22) Anmeldetag: 25.10.2010
(51) Int. Cl.: B23Q 11/00

(54) **HILFSVORRICHTUNG ZUR DURCHFÜHRUNG HANDWERKLICHER ARBEITEN**
AUXILIARY DEVICE FOR PERFORMING MANUAL WORK
DISPOSITIF AUXILIAIRE PERMETTANT L'EXÉCUTION DE TRAVAUX ARTISANAUX

(30) Priorität: 17.12.2009 DE 102009054815
(43) Veröffentlichungstag der Anmeldung: 24.10.2012
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2010/066022
(87) Internationale Veröffentlichungsnummer: WO 2011/072921

(56) Entgegenhaltungen:
- DE-A1- 3 631 360
- DE-A1-102006 024 985
- DE-B3-102006 018 976
- DE-U1- 8 116 865

## Beschreibung

Die Erfindung betrifft eine Hilfsvorrichtung zur Durchführung handwerklicher Arbeiten gemäß dem Oberbegriff des Anspruches 1.

### Stand der Technik

Hilfsvorrichtungen zum Abfangen von Bohrstaub oder Bohrmehl sind beispielsweise als Zubehörteile zu Staubsaugern bekannt (DE 195 43 599 B4) und als maulartige Fangtrichter ausgebildet, welche zum Bohrloch oder Bohrwerkzeug seitlich teilweise umgrenzend wand- oder deckenseitig angesetzt und gegebenenfalls auch haftend zu befestigen sind. Der Einsatz solcher Hilfsvorrichtungen bedingt somit in der Anschaffung wie auch im Einsatz einen Aufwand, wie er weitgehend nur im Profilbereich betrieben wird.

Eine demgegenüber recht einfache Hilfsvorrichtung zum Auffangen von Bohrmehl oder Bohrstaub ist aus der DE 20 2004 002 220 U1 bekannt. Gestaltet ist die Vorrichtung als kuvertartiger Behälter, der, mit seiner Frontseite der Wand zugewandt, über die in Verlängerung der Frontseite vorgesehene Kuvertlasche im Bereich des einzubringenden Bohrloches wandseitig, bei zur Wand ausgestellter Kuverttasche, befestigt wird. Auch wenn die Kuvertlasche über einen mit dieser verbundenen Haftstreifen unmittelbar überdeckend zur Bohrstelle angebracht und vom Bohrwerkzeug durchsetzt wird, kann über die Tasche nur das herabrieselnde Bohrmehl aufgefangen werden, die Ausbreitung des Bohrstaubes aber kaum verhindert werden. Zudem ist der Einsatz einer solchen Vorrichtung auf die Nutzung bei in Wände einzubringenden Bohrungen beschränkt.

Eine einfache und in der Praxis auch häufig eingesetzte Hilfsvorrichtung zum Abfangen von Bohrmehl oder Bohrstaub weist einen schalenförmigen, elastischen Fangbehälter auf, der zentral vom jeweiligen Bohrwerkzeug durchsetzt wird und der zusammen mit dem Bohrwerkzeug und geführt über das Bohrwerkzeug umschließend zur jeweiligen Bohrstelle zur Anlage an Wand oder Decke gebracht wird. Insbesondere beim Einbringen von Bohrlöchern in Wände lässt sich bei einer solchen Vorrichtung kaum vermeiden, dass das zunächst in der Schale gefangene Bohrgut beim Herausziehen des Bohrwerkzeugs aus dem Bohrloch und dem damit verbundenen Abheben der Fangschale von der Wand teilweise herausfällt und dementsprechend gesondert abgefangen werden muss.

Aus der DE 36 31 360 A1 ist eine längliche Sammelbox mit einem Sammelraum zum Auffangen von bei Bohrarbeiten anfallendem Bohrgut bekannt. Der Sammelraum ist im Bereich seines einen, vorderen Längsendes vom jeweiligen Bohrwerkzeug im Bereich eines Fangraumes durchsetzt. Der in Durchsteckrichtung des Bohrwerkzeuges flache Fangraum geht bei mausartiger Grundform des Gehäuses der Sammelbox in einen gegen das hintere Längsende auslaufenden Sammelbehälter über. Bei bodenseitig gegen eine jeweilige Ansatzfläche eines Werkteils anzulegender Sammelbox ist diese im Bereich des Fangraumes flacher ausgebildet als im Bereich des gegenüber dem Fangraum nach oben erweiterten Sammelbehälters. Rückseitig ist der Sammelbehälter über einen Deckel verschlossen. Umschließend zum jeweiligen Bohrwerkzeug sind den Durchstecköffnungen Dichtungen zugeordnet; deren eine bodenseitig zur Sammelbox der jeweiligen Ansatzfläche zugewandt vorgesehen ist.

Einen ähnlichen Grundaufbau einer quer zur Durchsteckrichtung für das jeweilige Bohrwerkzeug langgestreckten Sammelbox zeigt die DE 10 2006 024 985 A1. Die als rohrförmiger Körper ausgeführte Sammelbox ist im vorderen, mit Durchstecköffnungen für das jeweilige Bohrwerkzeug versehenen Teil im Bereich der zur jeweiligen Ansatzfläche benachbarten Durchstecköffnung abgeflacht ausgebildet, und im Bereich dieser Abflachung gegen die Längsachse der Sammelbox abgewinkelt, so dass deren hinterer, als Sammelbehälter dienender Raumteil zur jeweiligen Ansatzfläche winklig steht und als Handhabe zu nutzen ist.

Bei einer weiteren Vorrichtung zum Auffangen von Bohrgut gemäß der DE 81 16 865 U1 ist ein auf den Hals einer jeweiligen Bohrmaschine aufsteckbarer Fangkopf für das Bohrgut vorgesehen, der einen vom Bohrwerkzeug durchsetzten und gegen die jeweilige werkteilseitige Ansatzfläche anlegbaren Kopfteil aufweist und der mit einem radial zum Kopfteil auskragenden und mit dem Kopfteil lösbar verbundenen Auffangbehälter als Sammelbehälter versehen ist.

Eine vom Bohrwerkzeug durchsetzte und gegen die werkteilseitige Ansetzfläche offene, topfartige und einen Fangraum bildende Fangvorrichtung weist auch die DE 10 2006 018 976 B3 auf, bei der ein mit dem Fangraum in Verbindung stehender Sammelbehälter ein radial und stielartig auskragendes Vorrichtungsteil bildet, das als Handhabe zu nutzen und endseitig über einen Deckel verschließbar ist.

### Offenbarung der Erfindung

Durch die Erfindung soll eine weitgehend universell einsetzbare, leicht zu handhabende und autark einzusetzende Hilfsvorrichtung primär zum Abfangen von Bohrgut geschaffen werden, die - insbesondere als Zubehör bereitgestellt - vor allem im Hobbybereich als jederzeit mitführbares und einsetzbares Hilfsmittel zu nutzen ist.

Erreicht wird dies bei einer Hilfsvorrichtung der eingangs genannten Art mit den Merkmalen des Anspruches 1, wobei durch die Zusammenfassung von Fangraum und Sammelbehälter in einer Sammelbox ein Grundaufbau für eine Vorrichtung zum Abfangen von Bohrgut geschaffen wird, die trotz ihres einfachen Aufbaus und ihrer einfachen Handhabung eine hohe Funktionstüchtigkeit auch in den Händen ungeübter Benutzer gewährleistet, da die Sammelbox, als längliches, handgerecht geformtes Gerät gestaltet, eine gute Handhabbarkeit gewährleistet. Dadurch, dass der Sammelbehälter in Längsrichtung versetzt zum Fangraum liegt, wird ein flacher Aufbau möglich und werden insbesondere auch gute Voraussetzungen dafür geschaffen, den Sammelbehälter als vom Fangraum zu trennendes, schubladenartig in die Sammelbox integriertes und damit auch von der Sammelbox zu trennendes Bauteil zu gestalten.

Ein derartiger Grundaufbau macht es insbesondere auch möglich, bei insgesamt handlicher Gestaltung der Sammelbox einerseits einen im Volumen verhältnismäßig großen Sammelbehälter zu realisieren und andererseits die Sammelbox im Bereich des vom Werkzeug durchsetzten Fangraumes flach zu halten, so dass sich ein kurzer Zugriffsweg des Werkzeugs durch den Staubfangraum auf das jeweilige Werkstück ergibt, was die Führung des Werkzeugs und die verhakungsfreie Durchführung des Werkzeugs durch den Staubfangraum erleichtert.

Eine gute Handhabung der Sammelbox lässt sich insbesondere dadurch erreichen, dass die Sammelbox einen gegenüber dem flach gehaltenen Bereich des Fangraums - auch im Bereich des Fangraums - längsseitig in Verlängerung zum Sammelbehälter verlaufenden, zur Bodenfläche der Sammelbox aufragenden Randbereich aufweist, der als Führungsrand bei mit einer Führungshand übergriffener Sammelbox in einfacher Weise eine mausartige Handhabung derselben ermöglicht. Gleichzeitig wird über diesen Führungsrand eine Abschirmung geschaffen, die ein Zugreifen auf das den Fangraum durchsetzende Arbeitswerkzeug, insbesondere ein Abrutschen der Führungshand oder von Gliedern der Führungshand in dieses Arbeitswerkzeug verhindert.

Insbesondere in Verbindung mit einer kanalartigen Verbindung zwischen Fangraum und Sammelbehälter lässt sich auch eine gewisse Abgrenzung zwischen Fangraum und Sammelbehälter erreichen. Ferner ermöglicht die längliche, gestreckte Ausgestaltung eine lagesichere Führung des Sammelbehälters zum Boden der Sammelbox, so dass ein passgenaues Einsetzen des Sammelbehälters in die Sammelbox und damit auch ein guter gehäuseseitiger Anschluss erreicht werden kann.

Um im Überdeckungsbereich zwischen der Sammelbox und dem jeweiligen Werkstück oder Werkteil, auf das das den Fangraum durchsetzende Werkzeug Zugriff nimmt, ein Austreten von Bohrgut, insbesondere Bohrmehl oder Bohrstaub auf die Umgebung zu vermeiden, ist erfindungsgemäß bevorzugt bodenseitig umgrenzend zur jeweiligen Durchstecköffnung des Werkzeugs eine Dichtungsanordnung vorgesehen, die beispielsweise durch ein randseitig zu einem bodenseitigen Ausschnitt vorgesehenes Dichtungsprofil gebildet ist, so dass bei einem an ein Werkstück oder Werkteil angesetzter Sammelbox das anfallende Bohrgut nur auf den Fangraum übertreten und von dort in den Sammelbehälter gelangen kann.

Um auch einen Austritt von etwaigem Bohrstaub aus dem Sammelbehälter über die deckwandseitig zum Staubfangraum vorgesehene oder vorgesehenen Durchstecköffnungen für das Werkzeug zu verhindern, kann zweckmäßigerweise auch im Staubfangraum benachbart zur Deckwand und in teilweiser Überdeckung zu den Durchstecköffnungen für das Arbeitswerkzeug eine Dichtungsanordnung, insbesondere in Form einer Bürstenanordnung, vorgesehen sein. Über diese Bürstenanordnung ist gleichzeitig eine Abstreiffunktion zum jeweiligen Arbeitswerkzeug realisiert, so dass auch insoweit eine Abkapselung für den Fangraum zumindest weitgehend erreicht ist.

Die Handhabung der Sammelbox lässt sich erfindungsgemäß dadurch erleichtern, dass diese bodenseitig mit Stützfüßen, insbesondere noppenartigen elastischen Stützfüßen und/oder saugnapfartig ausgebildeten Stützfüßen versehen ist. Ferner erweist es sich für die Handhabung und/oder Fixierung der Sammelbox zum jeweiligen Werkstück oder Werkteil gegebenenfalls auch als zweckmäßig, wenn die Sammelbox mit über ihre Bodenfläche überstehenden, insbesondere ausfahrbaren Fixierstiften versehen wird, die gegebenenfalls auf ihre Ausgangslage federbelastet sind und die zweckmäßigerweise auch in Überdeckung zu den Stützfüßen und die Stützfüße durchsetzend angeordnet sein können. Bevorzugt liegen die Stützfüße zusammen mit den in der Deckwand zum Fangraum vorgesehenen, insbesondere trichterartig ausgebildeten Durchstecköffnungen für das oder die jeweiligen Arbeitswerkzeuge und innerhalb des vom Führungsrand umgriffenen Bereiches, so dass auch ein versehentliches Zugreifen auf die Fixierstifte erschwert ist.

Für eine derartig ausgestaltete Sammelbox erweist es sich als zweckmäßig, diese in ihrem Nutzungsspektrum dadurch zu erweitern, dass sie mit einer Ankörneinheit versehen wird, die einen gegen Federkraft über die Bodenfläche ausfahrbaren Körner aufweist, so dass in Vorbereitung des eigentlichen Bohrvorgangs eine jeweilige Bohrstelle angekörnt werden kann, ohne dass hierfür auf ein weiteres Hilfsgerät oder ein weiteres Hilfswerkzeug zurückgegriffen werden müsste. Insbesondere lässt sich eine solche Ankörneinheit am frei auslaufenden Ende des Führungsrandes anbringen, so dass die sonstigen Funktionen der Staubfangeinheit nicht beeinträchtigt sind und die Ankörneinheit günstig im Blickfeld für den Nutzer der Sammelbox liegt.

Als weitere Arbeitshilfe kann die Sammelbox mit zumindest einer Schraubenhalterung versehen sein, die bezogen auf eine aufzunehmende Schraube parallel zu der oder den Durchstecköffnungen für ein jeweiliges Bohrwerkzeug angeordnet ist, so dass im Anschluss an das Einbringen einer jeweiligen Bohrung in ein Werkstück oder Werkteil unter Zuhilfenahme der Staubfangvorrichtung auch ein ausgerichtetes Ansetzen von in eine jeweilige Bohrung einzubringenden Schrauben möglich ist, was insbesondere das Arbeiten mit scharfkantigen, vor allem über ihre Länge bis zum Kopf durchlaufend mit Gewinde versehenen Schrauben erleichtert. Bevorzugt sind eine oder mehrere derartige Schraubenhalterungen, entsprechend der Ankörneinheit, am zum Staubsammelbehälter gegenüberliegenden Ende der länglichen Sammelbox angeordnet, wobei es sich als zweckmäßig erweist, diese stirnseitig zum Fangraum zwischen den nach vorne auskragenden Enden des U-förmig umgrenzend zum Fangraum verlaufenden Führungsrandes vorzusehen. Die Schraubenhalterungen sind zweckmäßigerweise als federnd aufweitbare Führungen ausgebildet und können unter Aufspreizung quer zur jeweils aufgenommenen Schraube abgezogen werden. Im Hinblick auf unterschiedliche Schraubengrößen kann es zweckmäßig sein, mehrere solcher Schraubenhalterungen vorzusehen, die bevorzugt durch Steckverbindung zum Sammelbehälter festgelegt sind, oder auch zumindest eine Schraubenhalterung vorzusehen, die über eine entsprechende Hebelanordnung auf eine jeweilige Aufnahmeweite gegen Federvorspannung einstellbar ist.

Weitere Einzelheiten und Merkmale der Erfindung ergeben sich aus den weiteren Ansprüchen, der Beschreibung und den Zeichnungen. Es zeigen:
- Fig. 1: in Perspektive eine Draufsicht auf eine Sammelbox gemäß der Erfindung,
- Fig. 2: einen Längsschnitt durch eine Sammelbox gemäß Fig. 1 entsprechend der Schnittführung II-II in Fig. 4 und 5,
- Fig. 3: eine Seitenansicht der Sammelbox entsprechend dem Pfeil III in Fig. 5,
- Fig. 4: ein Schnitt durch die Sammelbox entsprechend der Schnittführung IV-IV in Fig. 3,
- Fig. 5: eine Ansicht der Sammelbox von unten, entsprechend dem Pfeil V in Fig. 2,
- Fig. 6: eine Schnittführung gemäß Linie VI-VI in Fig. 5,
- Fig. 7: einen Ausschnitt der Sammelbox entsprechend einer Schnittführung VII-VII in Fig. 4,
- Fig. 8: eine vergrößerte und isolierte Darstellung einer Schraubenhalterung, mit zugeordneter Schraube, und
- Fig. 9 bis 11: schematisierte Darstellungen einer Schraubenhalterung und einer Ankörneinheit, dargestellt an einer mausartig gestalteten Hilfsvorrichtung.

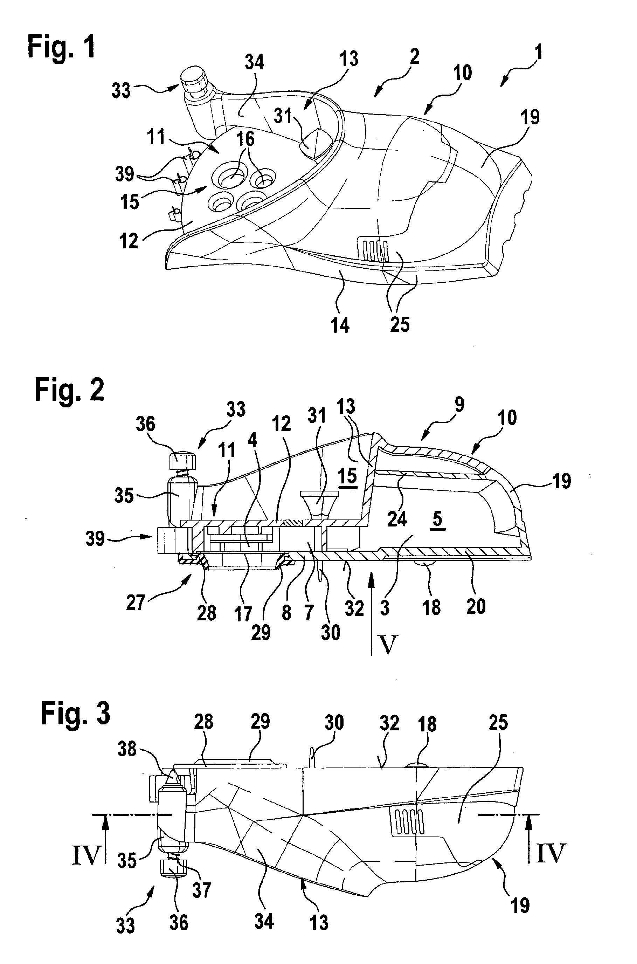

Die Fig. 1 bis 8 zeigen eine Hilfsvorrichtung 1 zur Durchführung handwerklicher Arbeiten, die in ihrer Grundfunktion eine Bohrgut-Sammelbox 2 bildet und im Hinblick darauf einen Sammelraum 3 umschließt, der einen im Arbeitseinsatz von einem nicht dargestellten Bohrwerkzeug durchsetzten Fangraum 4 und einen gegen den Fangraum 4 abgesetzten und mit diesem in Verbindung stehenden Sammelbehälter 5 aufweist.

Bezogen auf die in ihrer Formgebung längliche, etwa mausartig handgerecht geformte Sammelbox 2 liegen in Richtung der Längsachse 6 der Bohrgut-Sammelbox 2 der Fangraum 4 und der Sammelbehälter 5 einander gegenüber, und zwar verbunden über ein kurzes kanalartiges Zwischenstück 7. Der Sammelbehälter 5 ist schubladenartig ausgebildet und von hinten in Richtung der Längsachse 6 in die Sammelbox 2 eingeschoben, die überdeckend zu ihrem Boden 8 ein Gehäuse 9 aufweist. Das Gehäuse 9 ist, wie insbesondere der Längsmittelschnitt gemäß Fig. 2 zeigt, im zum schubladenartigen Sammelbehälter 5 überdeckenden Bereich überhöht als Handauflage für einen jeweiligen Benutzer gestaltet und es schließt sich an diesen den Sammelbehälter 5 überdeckenden Gehäusebereich 10 ein in Richtung auf den Boden 8 abgesenkter, niedriger Gehäusebereich 11 an, der eine zum Boden 8 verlaufende Deckwand 12 aufweist, welche gegen den Gehäusebereich 10 sowie auch längsrandseitig von einem Führungsrand 13 umschlossen ist, der sich längsrandseitig in Verlängerung des an den Boden 8 anschließenden Randbereiches 14 des Gehäuses 9 nach oben erstreckt und, die Deckwand 12 über diesen Randbereich 14 sowie auch gegenüber dem Gehäusebereich 10 abgrenzend, nach oben überstehend umgrenzt. Der Führungsrand 13 bildet somit bei auf dem Gehäusebereich 10 aufliegender Hand des Nutzers eine seitliche Umgrenzung für die Deckwand 12 und eine Anlage für die Finger, die gleichzeitig die Handauflage gegen den vom Führungsrand 13 umschlossenen Arbeitsbereich 15 schützend abgrenzt, in dem im Ausführungsbeispiel vier Durchstecköffnungen 16 für nicht dargestellte Bohrwerkzeuge, insbesondere Bohrer unterschiedlicher Größe vorgesehen sind, die durchsetzend zum Fangraum 4 über eine im Boden 8 vorgesehene Aussparung 17 auf das jeweilige Werkstück oder Werkteil zugreifen, auf das die Sammelbox 2 bodenseitig aufgesetzt ist.

Zur Abstützung gegen das jeweilige, hier nicht dargestellte Werkstück oder Werkteil, insbesondere eine Wand oder eine Decke, dienen im Ausführungsbeispiel am Boden 8 vorgesehene, insbesondere noppenartig ausgebildete Stützfüße 18, die gegebenenfalls auch saugnapfartig ausgebildet sein können, so dass sich auch auf glatten Flächen, wie insbesondere Fliesen, eine gute Haftung ergibt.

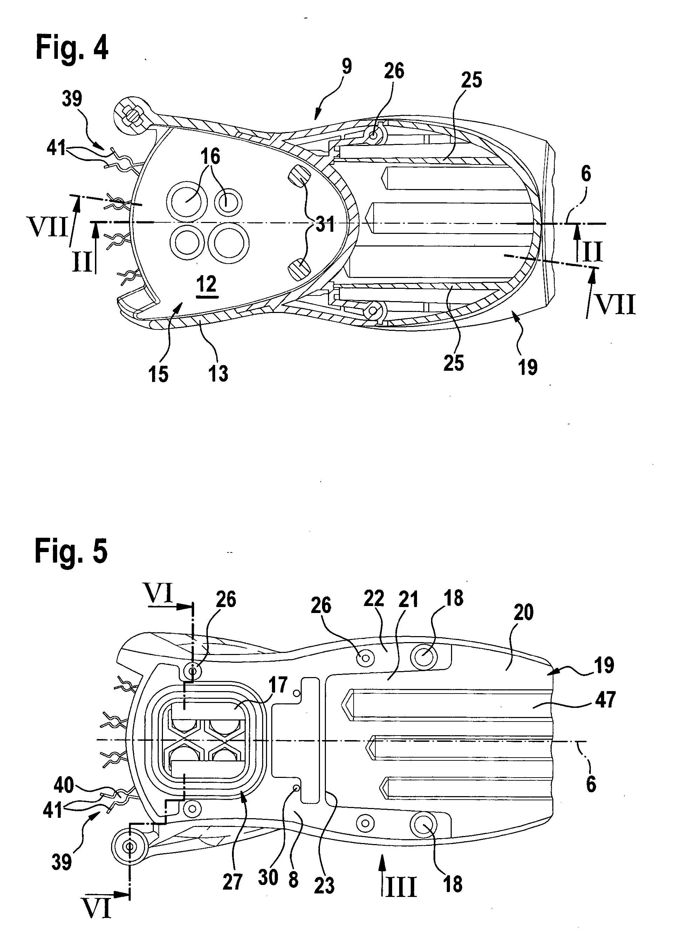

Die Stützfüße 18 liegen, wie insbesondere aus der Ansicht gemäß Fig. 5 ersichtlich, im rückwärtigen Endbereich des plattenartig ausgebildeten Bodens 8, und damit unterhalb des Gehäusebereiches 10, der als Handauflage nach oben ausgewölbt verrundet ausgebildet ist und in den von hinten der als Schublade 19 ausgebildete Sammelbehälter 5 eingeschoben ist, wobei der Boden 20 der Schublade 19 mit einem zentralen Vorsprung 21 zwischen Schenkel 22 des Bodens 8 des Gehäuses 9 eingreift, die dadurch gebildet sind, dass der Boden 8 mit einer zum Vorsprung 21 korrespondierenden Ausnehmung 23 versehen ist, die seitlich durch die Schenkel 22 des Bodens 8 als Führungsschenkel für die Schublade 19 begrenzt ist. Gegenüberliegend zum Boden 20 weist die Schublade 19 eine obere Abschlusswand 24 auf, so dass in Verbindung mit den seitlichen Begrenzungswänden 25 ein geschlossener und bei eingeschobener Schublade 19 lediglich über die Kanalverbindung zum Fangraum 4 zugänglicher Sammelraum 3 ergibt, der durch Entnahme der Schublade 19 unschwer zu entleeren ist. Bevorzugt ist die Schublade 19 zum Boden 8, insbesondere aber zum Gehäuse 9, im geschlossenen Zustand verrastet fixiert, wobei der Boden 8 zum Gehäuse 9 gegebenenfalls auch verrastend festgelegt sein kann, bevorzugt aber über Verschraubungen 26 festgelegt ist.

Die im Überdeckungsbereich zu den bevorzugt in Einführrichtung des jeweiligen Bohrwerkzeuges trichterförmig gestalteten Durchstecköffnungen 16 liegende bodenseitige Aussparung 17 ist randseitig von einer Dichtungsanordnung 27 umschlossen, welche als zum Boden 8 bevorzugt eingeklipster Dichtring 28 ausgebildet ist, der in Richtung auf das jeweilige, die Anlage für die Sammelbox 2 bildende Werkstück oder Werkteil in einer Dichtlippe 29 ausläuft, so dass sich auch bei kleineren Unebenheiten der jeweiligen Ansatzfläche für die Sammelbox 2 noch ein dichtender Abschluss ergibt.

Die Sammelbox 2 ist weiter mit Fixierstiften 30 versehen. Diese sind bevorzugt durchsetzend zur Deckwand 12 im vom Führungsrand 13 umschlossenen Gehäusebereich 11 vorgesehen und mit Druckköpfen 31 versehen, so dass die zum Eindrücken der Fixierstifte 30 in ein jeweiliges Werkstück oder Werkteil, insbesondere beispielsweise in eine verputzte Wandfläche aufzubringende Druckkraft unmittelbar auf die Fixierstifte 30 ausgeübt werden kann. Ungeachtet dessen können die Fixierstifte 30 zum Gehäuse 9 lagefest, bevorzugt aber verschieblich geführt angeordnet sein, wobei es sich als zweckmäßig erweist, wenn die Fixierstifte 30 auf eine zur Bodenfläche 32 versenkte Lage zurückgezogen, bevorzugt leicht federnd abgestützt sind. Zweckmäßigerweise sind die Fixierstifte 30 zumindest in ihrer zur Bodenfläche 32 versenkten Lage reibschlüssig gesichert. In ihrer in das Werkteil oder Werkstück eingreifenden, über die Bodenfläche 32 hinausgedrückten Lage können die Fixierstifte reibschlüssig, beispielsweise zur Deckwand 12, festgelegt sein, und/oder durch ihren Eingriff in das Werkstück oder Werkteil festgelegt sein.

Im Rahmen der Erfindung liegt es auch, die Fixierstifte 30 durchsetzend zu Stützfüßen 18 anzuordnen, die gegebenenfalls napfartig ausgebildet sind, wobei die elastisch ausgebildeten Stützfüße 12 zugleich eine reibschlüssige Führung für die Fixierstifte 30 bilden können.

In weiterer erfindungsgemäßer Ausbildung der in ihrer Grundfunktion eine Sammelbox 2 bildenden Hilfseinrichtung 1 kann diese mit einer Ankörneinheit 33 versehen sein. Im Ausführungsbeispiel ist diese Ankörneinheit 33 am über den Boden 8 und die Deckwand 12 nach vorne auskragenden Ende eines Schenkels 34 des Führungsrandes 13 vorgesehen. Der Schenkel 34 läuft hierzu in einer zur Bodenfläche 32 senkrechten Führungshülse 35 für den Körner 36 aus, der zur Führungshülse 35 in Richtung auf seine Ruhelage federnd über eine angedeutete Feder 37 abgestützt ist. In der Ruhelage nimmt der Körner 36 bevorzugt eine Lage ein, in der er über die Bodenfläche 32 nicht vorsteht, aber zumindest mit seiner Spitze 38 über die oberhalb der Bodenfläche 32 endende Führungshülse 35 hinausragt, so dass zumindest der in der Spitze 38 auslaufende Teil des Körners 36 im freien Blickfeld liegt und auf eine jeweilige werkstück- oder werkteilseitig vorgesehene Markierung gut ausgerichtet werden kann. Die angekörnte Markierung lässt sich als Senke zur jeweiligen Oberfläche des markierten Werkstücks oder Werkteils unter anderem unmittelbar über einen die jeweils zugehörige Durchstecköffnung 16 eingeführten Bohrer auch tastend leicht erfassen.

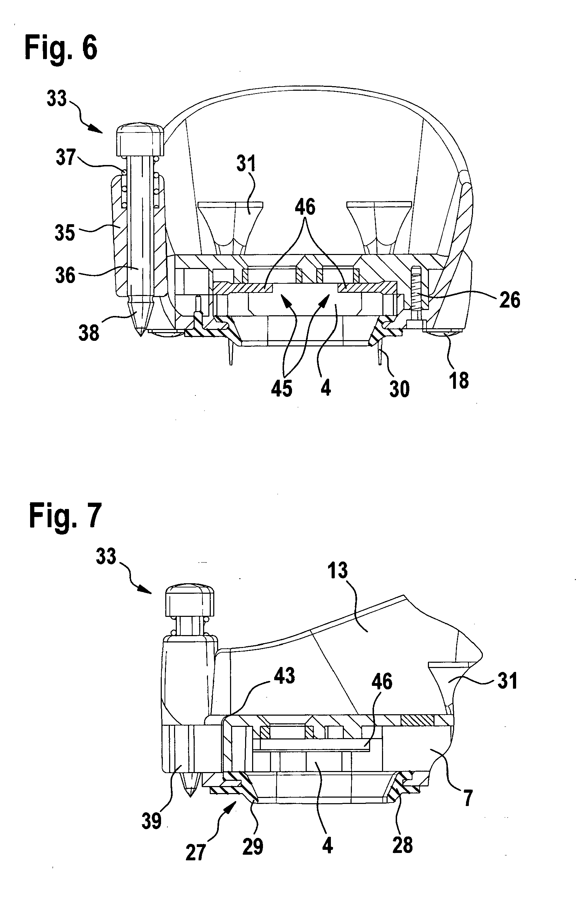

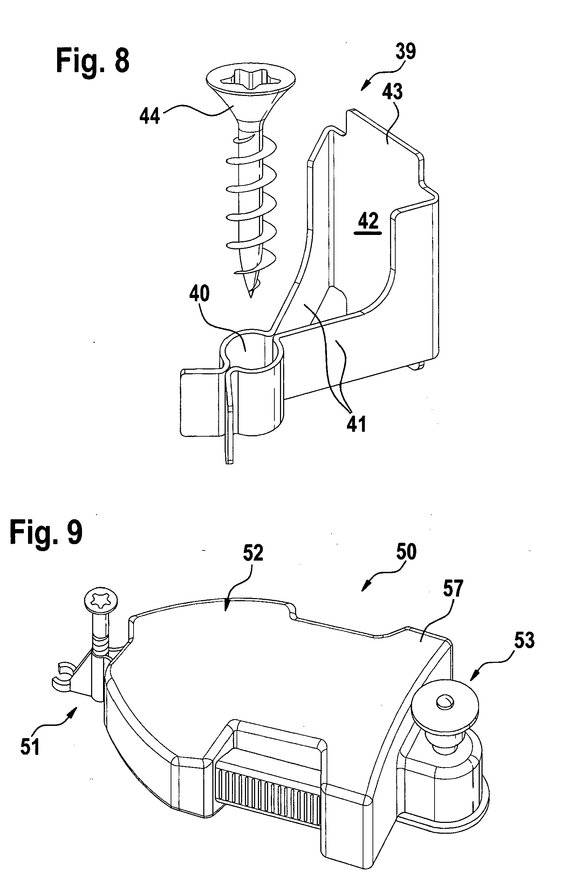

Frontseitig zum Gehäusebereich 11 sind im gezeigten Ausführungsbeispiel erfindungsgemäß Schraubenhalterungen 39 vorgesehen, die quer zu ihrer senkrecht zur Bodenfläche 32 sich erstreckenden Führungsöffnung 40 federnd aufspreizbar ausgebildet sind und deren die Führungsöffnung 40 umschließende Federschenkel 41 an ihrem zum Gehäuse 9 abgelegenen, freien Schenkelenden gegeneinander ausgespreizt auslaufen. Im Ausführungsbeispiel sind mehrere solcher Schraubenhalterungen 39 mit unterschiedlich großen Führungsöffnungen 40 vorgesehen, die zwischen den über die Deckwand 12 frontseitig überstehenden Enden der seitlichen Schenkel 34 des Führungsrandes 13 zwischen der Deckwand 12 und dem gegen diese verspannten Boden 8 über ihren Verbindungssteg 42 festgelegt sind. Der Verbindungssteg 42 zwischen den Federschenkeln 41 läuft hierzu, wie in Fig. 8 veranschaulicht, an seinen gegenüberliegenden freien Enden in Ansätzen 43 aus, die, wie aus Fig. 7 ersichtlich, in entsprechende nutartige Aufnahmen eingreifen, die seitens des Bodens 8 und der Deckwand 12 vorgesehen sind.

Fig. 8 veranschaulicht eine solche Schraubenhalterung in Verbindung mit einer Schraube 44, die axial zur Führungsöffnung 40 liegt und axial in diese Führungsöffnung 40 eingesetzt auf ein jeweiliges Bohrloch, oder einen in diesem Bohrloch vorgesehenen Dübel, über eine entsprechende Handhabung der Sammelbox 2 ausgerichtet werden kann. Von der in das Bohrloch bzw. den zugehörigen Dübel eingeführten Schraube 44 kann der Schraubenhalter 39 durch Aufspreizen seiner Federschenkel 41 abgezogen werden.

Somit ist erfindungsgemäß eine insbesondere auch für Hobbyhandwerker geeignete Hilfsvorrichtung 1 geschaffen, die ein besonders einfaches und sauberes Arbeiten beim Einbringen von Bohrungen in Werkstücke oder Werkteile ermöglicht und die auch das Setzen entsprechender Schrauben 44 erleichtert. In Verbindung mit der Ausgestaltung der Hilfsvorrichtung 1 als Sammelbox 2 ist ein sauberes Arbeiten sowohl beim Einbringen von Bohrungen in Wände wie auch in Decken gewährleistet, wozu erfindungsgemäß auch beiträgt, dass die Durchstecköffnungen 16 eintrittsseitig zum Fangraum 4 über eine Dichtungsanordnung 45 zumindest weitgehend abgeschirmt sind. Die Dichtungsanordnung 45 kann in Zuordnung zur jeweiligen Durchstecköffnung 16 jeweils eine zugehörige dichtende Abschirmung umfassen, die beispielsweise als Bürste oder auch membranartig gestaltet ist, so dass sie sowohl das Durchstecken eines Bohrers ermöglicht wie auch die Durchstecköffnung 16 beim Herausziehen des Bohrers bzw. nach Herausziehen des Bohrers zumindest teilweise überdeckt.

Im Ausführungsbeispiel ist, wie insbesondere die Fig. 5 bis 7 veranschaulichen, die Dichtungsanordnung 45 durch Bürstenleisten 46 gebildet, die jeweils zwei der in den Eckpunkten eines Vierecks, insbesondere eines Rechtecks liegenden Durchstecköffnungen 16 von einander gegenüberliegenden Seiten zumindest teilweise überdecken. Eine solche Dichtungsanordnung 45 mit Bürstenleisten 46 hat auch beim jeweiligen Bohrvorgang durch den Übergriff zum jeweiligen Bohrwerkzeug eine entsprechende Abweisfunktion, über die anfallendes Bohrgut, insbesondere Bohrmehl oder Bohrstaub in Erstreckungsrichtung der Bürstenleiste 46 abgestreift wird, so dass sich auch bei horizontaler Lage der Sammelbox 2 ein Fördereffekt in Richtung auf den Sammelraum 3 ergeben kann.

Im Ausführungsbeispiel ist weiter dargestellt, dass, wie insbesondere die Fig. 1, 4 und 5 veranschaulichen, der Sammelbehälter 5 bodenseitig mit rinnenförmigen, sich in Richtung der Längsachse 6 erstreckenden Vertiefungen 47 versehen sein kann, die bevorzugt bezüglich ihres rinnenförmigen Querschnittes jeweils auf den Durchmesser einer Durchstecköffnung 16 abgestimmt sind, so dass sich ohne weitere Hilfsmittel durch Einlegen eines jeweiligen Bohrwerkzeuges in eine passende rinnenförmige Vertiefung 47 feststellen lässt, welche der Durchstecköffnungen 16 für das jeweilige Bohrwerkzeug passend ist.

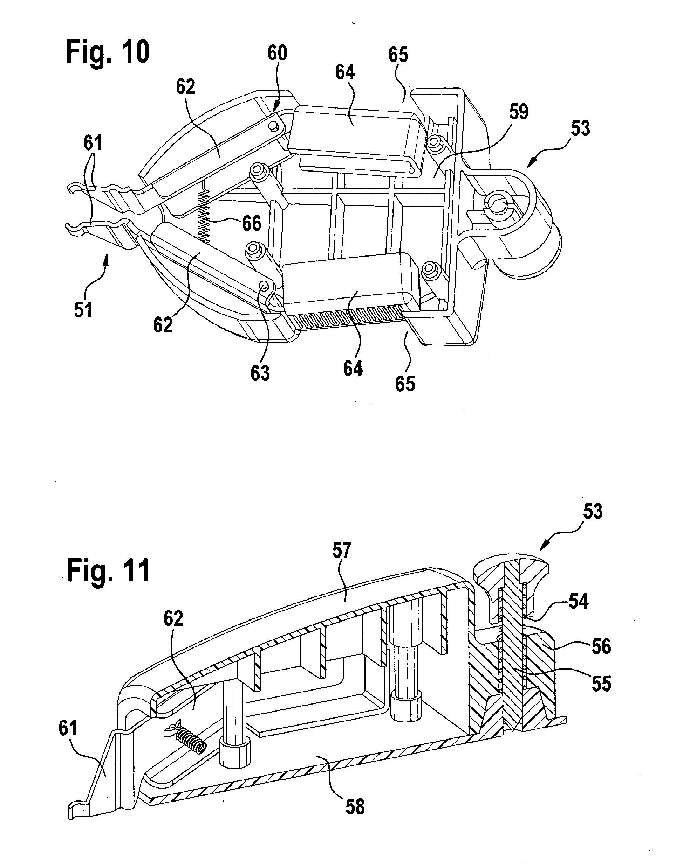

Eine in den Funktionen reduzierte Hilfseinrichtung 50 ist in den Fig. 9 bis 11 zur Veranschaulichung einer in ihrer Öffnungsweite aktiv verstellbaren Schraubenhalterung 51 gezeigt, die an dem einen Ende eines mausähnlichen Handhabungsteiles 52 gegenüberliegend zu einer am anderen Ende desselben vorgesehenen Ankörneinheit 53 angeordnet ist. Diese Ankörneinheit 53 entspricht in ihrem Aufbau grundsätzlich der Ankörneinheit 33 gemäß dem in den Fig. 1 bis 8 dargestellten Ausführungsbeispiel und weist einen auf seine Ausgangslage über eine Rückstellfeder 54 belasteten Körner 55 auf, der in einem rückwärtigen Ansatz 56 zum Gehäuse 57 des Handhabungsteiles 52 geführt ist, das gegen ein Bodenteil 58 einen Innenraum 59 abgrenzt, in dem die Verstellmechanik 60 für die gegeneinander verstellbaren, über das Gehäuse 57 hinausragenden Führungsbacken 61 angeordnet ist. Die Verstellmechanik 60 umfasst bei symmetrischem Aufbau die Führungsbacken 61 tragende Schwenkarme 62, welche über Achsbolzen 63 zum Gehäuse 57 festgelegt sind und an ihren von den Führungsbacken 61 abgelegenen Enden einander gegenüberliegende Drucktasten 64 tragen. Die Drucktasten 64 liegen in Überdeckung zu seitlichen Ausschnitten 65 des Gehäuses 57 und sind mit zu den Führungsbacken 61 gegenüberliegenden Auslegern der Schwenkarme 62 verbunden, die in Schließrichtung der Führungsbacken 61 gegeneinander federnd verspannt sind, wobei die federnde Verspannung über eine quer zwischen den Schwenkarmen 62 erfolgende Spannfeder 66 erfolgt. Durch Betätigung der Drucktasten 64 sind die Führungsbacken 61 in Öffnungsrichtung entgegen der Federvorspannung verstellbar.

## Patentansprüche

1. Hilfsvorrichtung zur Durchführung handwerklicher Arbeiten, die einen Sammelraum (3) für bei Arbeiten mit einem Bohrwerkzeug anfallendes Bohrgut aufweist, der vom Bohrwerkzeug durchsetzt ist und das Bohrwerkzeug anschließend an dessen werkteil- oder werkstückseitigen Arbeitsbereich umgrenzt, wobei der Sammelraum (3) in einer Bohrgut-Sammelbox (7) ausgebildet ist und einen vom Bohrwerkzeug durchsetzten Fangraum (4) und einen zu diesem abgesetzten Sammelbehälter (5) aufweist und wobei, bei länglicher, mausartig handgerechter Formgebung der Sammelbox (2), der Sammelbehälter (5) und der Fangraum (4) in Richtung der Längsachse der Sammelbox (2) einander gegenüber und quer zur Durchsteckrichtung des Bohrwerkzeuges zum Fangraum (4) zueinander versetzt liegen,
**dadurch gekennzeichnet, dass** der Sammelbehälter (5) schubladenartig einsteckbar in die Sammelbox (2) integriert ist.

2. Hilfsvorrichtung nach Anspruch 1,
**dadurch gekennzeichnet, dass** der Fangraum (4) und der Sammelbehälter (5) gegenüberliegenden Endabschnitten der Sammelbox (2) zugeordnet sind, deren Gehäuse (9) einen gegenüber dem zum Sammelbehälter (5) überdeckenden Gehäusebereich (10) abgesenkten, zum Fangraum (4) überdeckenden Gehäusebereich (11) aufweist und die in Überdeckung zum Fangraum (4) einen umgrenzenden, zum Boden der Sammelbox (2) aufragenden Führungsrand (13) aufweist.

3. Hilfsvorrichtung nach Anspruch 2, **dadurch gekennzeichnet, dass** der Führungsrand (13) eine Deckwand (12) zum Fangraum (4) umschließt, in dem zur zumindest einen Werkzeug-Durchstecköffnung (16) bodenseitig umgrenzend eine Dichtungsanordnung (27) vorgesehen ist.

4. Hilfsvorrichtung nach Anspruch 3, **dadurch gekennzeichnet, dass** die vom Führungsrand (13) umgrenzte Deckwand (12) zum Fangraum (4) eine gegenüber dem Führungsrand (13) abgesenkte, zum Boden (8) der Sammelbox (2) benachbarte Lage einnimmt.

5. Hilfsvorrichtung nach einem der Ansprüche 2 bis 4, **dadurch gekennzeichnet, dass** die Sammelbox (2) mit über ihre Bodenfläche (32) überstehenden, ausfahrbaren Fixierstiften (30) versehen ist, die im vom Führungsrand (13) umgrenzten Bereich liegen.

6. Hilfsvorrichtung nach einem der vorhergehenden Ansprüche, **dadurch gekennzeichnet, dass** die Sammelbox (2) mit einer Ankörneinheit (23) versehen ist, die einen gegen Federkraft über die Bodenfläche (32) ausfahrbaren Körner (36) umfasst, der im Bereich eines der frei auslaufenden Enden des zur Deckwand (12) U-förmig umgreifenden Führungsrandes (13) vorgesehen ist.

7. Hilfsvorrichtung nach einem der vorhergehenden Ansprüche, **dadurch gekennzeichnet, dass** die Sammelbox (2) mit zumindest einer Schraubenhalterung (39) versehen ist, die eine im Querschnitt federnd aufweitbare, quer zu ihrer Bodenfläche (32) sich erstreckende Schrauben-Führungsöffnung (40) aufweist und die am stirnseitigen, vom Sammelbehälter (5) abgelegenen Rand der Sammelbox (2) vorgesehen ist.

8. Hilfsvorrichtung nach einem der Ansprüche 2 bis 8, **dadurch gekennzeichnet, dass** der zumindest einen in der Deckwand (12) zum Fangraum (4) vorgesehenen Werkzeug-Durchstecköffnung (16) eine Dichtungsanordnung (45) zugeordnet ist, die sich quer zur zumindest einen Durchstecköffnung (16) erstreckt und durch eine leistenartige Bürstendichtung (45) gebildet ist.

## Claims

1. Auxiliary device for performing manual work, which has a collecting chamber (3) for drillings which occur when working with a drilling tool, which chamber is traversed by the drilling tool and then surrounds the drilling tool at its working region on the workpart or workpiece side, wherein the collecting chamber (3) is formed in a drillings collecting box (7) and has a catching chamber (4) traversed by the drilling tool and a collecting container (5) offset with respect to said catching chamber, and wherein, with an elongate configuration of the collecting box (2) that is suitable for the hand in a mouse-like manner, the collecting container (5) and the catching chamber (4) lie opposite one another in the direction of the longitudinal axis of the collecting box (2) and are offset with respect to one another transversally to the plug-through direction of the drilling tool with respect to the catching chamber (4), **characterized in that** the collecting container (5) is integrated into the collecting box (2) such that it can be inserted in the manner of a drawer.

2. Auxiliary device according to Claim 1, **characterized in that** the catching chamber (4) and the collecting container (5) are assigned opposite end sections of the collecting box (2), the housing (9) of which box has a housing region (11) which covers the catching chamber (4) and which is lowered with respect to the housing region (10) covering the collecting container (5), and which box, covering the collecting chamber (4), has a surrounding guide edge (13) which projects with respect to the bottom of the collecting box (2).

3. Auxiliary device according to Claim 2, **characterized in that** the guide edge (13) encloses a cover wall (12) with respect to the catching chamber (4), in which chamber a sealing arrangement (27) is provided to surround the at least one tool plug-through opening (16) at the bottom.

4. Auxiliary device according to Claim 3, **characterized in that** the cover wall (12) with respect to the catching chamber (4) that is surrounded by the guide edge (13) assumes a position which is lowered with respect to the guide edge (13) and which is adjacent to the bottom (8) of the collecting box (2).

5. Auxiliary device according to one of Claims 2 to 4, **characterized in that** the collecting box (2) is provided with extendable fixing pins (30) which project beyond its bottom surface (32) and which are situated in the region surrounded by the guide edge (13).

6. Auxiliary device according to one of the preceding claims, **characterized in that** the collecting box (2) is provided with a centre punch unit (23) which comprises a centre punch (36) which can be extended beyond the bottom surface (32) against spring force and which is provided in the region of one of the freely terminating ends of the guide edge (13) enclosing the cover wall (12) in a U-shaped manner.

7. Auxiliary device according to one of the preceding claims, **characterized in that** the collecting box (2) is provided with at least one screw holder (39) which has a screw guide opening (40) which is resiliently expandable in cross section and extends transversely with respect to its bottom surface (32) and which is provided on the end edge of the collecting box (2) that is remote from the collecting container (5).

8. Auxiliary device according to one of Claims 2 to 8, **characterized in that** the at least one tool plug-through opening (16) provided in the cover wall (12) with respect to the catching chamber (4) is assigned a sealing arrangement (45) which extends transversally to the at least one plug-through opening (16) and is formed by a strip-like brush seal (45).

## Revendications

1. Dispositif auxiliaire permettant d'effectuer des travaux artisanaux, qui présente un espace de collecte (3) pour des déchets de perçage se formant lors de travaux avec un outil de perçage, l'espace de collecte étant traversé par l'outil de perçage et entourant l'outil de perçage à la suite de sa zone de travail du côté de la partie de travail ou de la pièce, l'espace de collecte (3) étant réalisé dans une boîte de collecte de déchets de perçage (7) et présentant un espace de captage (4) traversé par l'outil de perçage et un réservoir de collecte (5) décalé par rapport à celui-ci, et, lorsque la boîte de collecte (2) a une forme allongée, en forme de souris, adaptée à la main, le réservoir de collecte (5) et l'espace de captage (4) étant disposés dans la direction de l'axe longitudinal de la boîte de collecte (2) en regard l'un de l'autre et de manière décalée l'un par rapport à l'autre transversalement à la direction d'enfoncement de l'outil de perçage par rapport à l'espace de captage (4),
**caractérisé en ce que** le réservoir de collecte (5) est intégré dans la boîte de collecte (2) de manière à pouvoir être enfoncé à la manière d'un tiroir.

2. Dispositif auxiliaire selon la revendication 1, **caractérisé en ce que** l'espace de captage (4) et le réservoir de collecte (5) sont associés à des portions d'extrémité opposées de la boîte de collecte (2), dont le boîtier (9) présente une région de boîtier (11) de recouvrement pour l'espace de captage (4), abaissée par rapport à la région de boîtier (10) de recouvrement pour le réservoir de collecte (5), et laquelle boîte de collecte présente un bord de guidage (13) périphérique, faisant saillie vers le haut par rapport au fond de la boîte de collecte (2) dans le recouvrement pour l'espace de captage (4).

3. Dispositif auxiliaire selon la revendication 2, **caractérisé en ce que** le bord de guidage (13) entoure une paroi de couvercle (12) pour l'espace de captage (4), dans laquelle est prévu un agencement d'étanchéité (27) situé de manière enveloppante du côté du fond pour au moins une ouverture d'enfoncement (16) pour un outil.

4. Dispositif auxiliaire selon la revendication 3, **caractérisé en ce que** la paroi de couvercle (12) pour l'espace de captage (4), enveloppée par le bord de guidage (13), adopte une position rabaissée par rapport au bord de guidage (13), adjacente au fond (8) de la boîte de collecte (2).

5. Dispositif auxiliaire selon l'une quelconque des revendications 2 à 4, **caractérisé en ce que** la boîte de collecte (2) est pourvue de goupilles de fixation (30) pouvant être déployées et dépassant au-delà de sa surface de fond (32), lesquelles se situent dans la région enveloppée par le bord de guidage (13).

6. Dispositif auxiliaire selon l'une quelconque des revendications précédentes, **caractérisé en ce que** la boîte de collecte (2) est pourvue d'une unité de marquage (23) qui comprend un pointeau (36) pouvant être déployé à l'encontre d'une force de ressort au-delà de la surface du fond (32), qui est prévu dans la région de l'une des extrémités sortant librement du bord de guidage (13) venant en prise en forme de U autour de la paroi de couvercle (12).

7. Dispositif auxiliaire selon l'une quelconque des revendications précédentes, **caractérisé en ce que** la boîte de collecte (2) est pourvue d'au moins une fixation pour vis (39) qui présente une ouverture de guidage de vis (40) s'étendant transversalement à sa surface de fond (32), pouvant être élargie élastiquement en section transversale, et qui est prévue sur le bord de la boîte de collecte (2) du côté frontal, opposé au réservoir de collecte (5).

8. Dispositif auxiliaire selon l'une quelconque des revendications 2 à 8, **caractérisé en ce que** l'au moins une ouverture d'enfoncement (16) pour un outil, prévue dans la paroi de couvercle (12) pour l'espace de captage (4), est associée à un agencement d'étanchéité (45) qui s'étend transversalement à l'au moins une ouverture d'enfoncement (16) et qui est formé par un joint d'étanchéité à brosse (45) de type baguette.
